# EUROPEAN PATENT APPLICATION

(11) **EP 1 473 188 A1**
(43) Date of publication of application: **03.11.2004**
(21) Application number: 03380105.1
(22) Date of filing: 30.04.2003
(51) Int. Cl.: B60N 2/48

(54) **Guide sleeve for head rest of a vehicle seat**

(71) Applicant: Lear Corporation Spain, S.L., 26509 Arrubal (La Rioja) (ES)
(72) Inventor: Fernandez de la Pradilla, David, Poligono El Sequero, 26509 Arrubal (ES); Valganon Barrio, Javier, Poligono El Sequero, 26509 Arrubal (ES)
(74) Representative: Primo de Rivera y Urquijo, Jose Antonio

(57) **Abstract**

The system comprises a sleeve (1) whose axial passage houses the rod (6) corresponding to the vehicle seat headrest, the sleeve (1) being finished on its upper part with a head (4) on which a push button (8) element is assembled carrying a cross shaft (10) which acts on a side notch of a rod (6), retaining the latter, this cross shaft (10) being constantly pushed towards the notch of the rod (6) by means of an "X"-shaped spring (11) linked in the end opposite to the part of the manual push button (8) which is actuated, by means of pushing, to take with it the drawing of the cross shaft (10) and release of the rod (6), permitting the removal of the latter, and therefore making the headrest independent with regard to the sleeve (1) and therefore to the seat in which it is applied.

## Description

### OBJECT OF THE INVENTION

The present invention refers to a headrest rod and vehicle seat locking system, and more specifically to the anchoring system between the headrest rod or rods and a support body or bushing introduced and suitably retained in the vehicle seat, based on the thrust carried out by a spring on a part belonging to a manual actuation button, which carries a cross shaft placed in a notch formed for that purpose on the corresponding headrest rod, which slides inside of the bushing.

### BACKGROUND OF THE INVENTION

US patent number 5,667,276-B discloses a headrest and seat locking assembly, including a tubular element held inside of the seat, the upper part complemented with a cap also provided with a hole aligned with the hole of the tubular element, a groove and coupling means being provided, furthermore comprising an "X"-shaped spring with two of its free ends connected and the other two supported on a wall, such that the spring can occupy a normal position in which it partly crosses over the cap hole for being locked into one of the grooves made for that purpose on the corresponding headrest rod, this spring being able to occupy a compressed position in which it is outside of the action field of the hole, thus releasing the headrest rod.

This assembly disclosed in said US patent number 5,667,276-B also comprises an actuation element or button introduced in the cap groove, being coupled to the cap by means of coupling means existing on the cap itself, such that the actuation element is provided with means so that the spring remains locked by its larger base, such that pushing the button makes the spring compress, whereas if the button is not pushed, the spring remains in normal position, all this such that said actuation element or button has two "legs" or side branches defining a cavity for housing the headrest rod, one of the legs being more resilient than the other so as to permit its introduction inside of the cap through the groove existing thereon.

Sleeve and cap can form a single body, the latter being able to have means which permit maintaining effective retention thereof on the seat.

Also worth mentioning is US patent number 4,577,934, also disclosing a sleeve or guide for the headrest in vehicle seats, having features similar to those of the aforementioned patent.

US patent number 6,099,077-B, like the two previously mentioned ones, discloses a headrest rod to vehicle seat anchoring system, such that in this case, the tubular body or bushing configuration varies since it comprises two bodies, one body constituting the bushing itself and another body constituting a longitudinal tubular body located inside of the seat on which the aforementioned bushing or body is coupled. In this patent, the way of locking the spring to the button or actuation element also varies, being formed in this case by means of two lugs protruding from the actuation element which are introduced in respective holes made on the spring.

Another document disclosing the prior state of the art is European patent application number EP0798157-A, which discloses another headrest rod to seat locking system, with the same basic elements, although in this case, instead of being "X"-shaped, the spring is "U"-shaped, also being connected to the button or actuation element through a hole made on the latter and in which said spring is introduced. In this case, the actuation element and the cap of the sleeve or tubular element is different from the one provided in the previously mentioned patents.

All the indicated patent documents disclose a tubular body or bushing housed and locked inside of the seat; a cap having a hole facing the passage arranged for that purpose on the bushing or tubular body fixed inside of the seat; a rod corresponding to the headrest, housed in the hole of both the cap and bushing, sliding through the latter, and rod retention means in a certain position, anchoring or retention of the rod being carried out by means of a spring associated to the manual actuation element or button.

The main drawback posed by the aforementioned systems or devices consists of the fact that the "X"-shaped spring is subjected to significant forces, in the rod locking position, acting directly on the rod, as well as in the actuation on the manual actuation push button element or button, all this regardless of the fact that, in no case can the rod descend down to its maximum penetration by simple vertical pushing on the headrest, and that furthermore, in its lock-in position, it is obstructed from being removed by manual pulling unless the push button element or button is acted on.

### DESCRIPTION OF THE INVENTION

The headrest rod and vehicle seat locking system proposed herein, based on said means in the documents of the previous section, has a series of novelty steps leading to advantages from both a functional as well as system effectiveness point of view.

More specifically, one of the novelties of the system of the invention is that the locking of the headrest rod with regard to the bushing is not directly carried out by the spring, but rather a cross shaft which, in the spring's inoperative position, is pushing against the manual actuation device assembly, urging that cross shaft to act on the corresponding side notch of the headrest rod, whereas a thrust to release the latter urges the manual actuation device assembly, and with it the cross shaft itself, to move, being released from the rod and therefore permitting removal of the latter with regard to the tubular body or bushing provided inside of the seat, all this in relation to said "X"-shaped spring forming part of the system assembly.

The fact that the locking is carried out by means of that cross shaft and not directly by means of the spring makes the stresses to which the latter is subjected smaller than when the spring itself constitutes the headrest rod locking element.

Another novelty feature is that the system of the invention as a whole is complemented with an upper adornment providing a nice appearance and pleasant outer aesthetic aspect, said adornment even being able to act as a retaining element of the push button or manual actuation device in a possible embodiment variant.

Another novelty feature of the system of the invention is that the side notch of the rod in which the cross shaft is placed for locking of the rod and therefore of the headrest with regard to the vehicle seat, has a lower straight edge, whereas the upper edge is inclined, making the downward movement of the rod possible, however, upward movement being impossible even though the rod is pulled on unless the element or push button is acted on, which carries out the release of the rod with regard to that anchoring cross shaft.

### DESCRIPTION OF THE DRAWINGS

To complement the description that is being made and for the purpose of helping to better understand the features of the invention, a set of drawings, according to a preferred practical embodiment example thereof, is attached as an integral part of said description which, with an illustrative and non-limiting character, show the following:

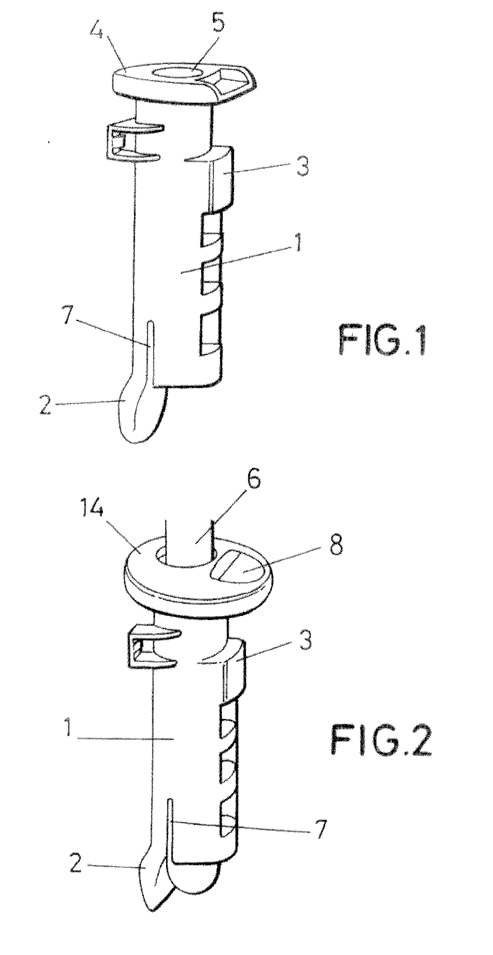

Figure 1 shows a general perspective view of the tubular element or bushing forming part of the headrest rod and vehicle seat locking system.
Figure 2 shows another general perspective view like that of the previous figure, but with the rod axially passing through the sleeve and with the upper adornment placed thereon.
Figure 3 shows an upper perspective view of the part corresponding to the assembly where means for locking the rod and manual button for release thereof are located, showing the hole of the bushing without the corresponding rod.
Figure 4 shows a perspective view like that of the previous figure, but with the headrest rod placed inside of the bushing, being retained by the cross shaft pushed towards the anchoring position by means of the "X"-shaped spring connected to the manual push button element.

### PREFERRED EMBODIMENT OF THE INVENTION

As can be seen in said figures, the system of the invention comprises a tubular body (1) defining a long bushing with a lower part (2) for anchoring inside of the vehicle seat in which it is applied, as well as a rotation positioner (3) limiting the rotation according to the vertical shaft of the bushing (1), having external protrusions suitable for preventing unwanted movement of the bushing (1) with regard to the frame of the seat at hand, as well as for providing a suitable bushing-frame resistance.

On its upper end, a head (4) is defined which has an axial and central hole (5) affecting the entire bushing (1), whose inner part has longitudinal ribs for better locking of the corresponding headrest rod (6), which is axially introduced, through the hole (5), into the described bushing (1) .

The lower part is provided with grooves (7) on the basis of which certain resilience is achieved when assembling the bushing (1) on the seat frame.

The manual actuation push button element (8) is assembled on the hollow part of the head (4) defined from the side opening thereof, which element is provided with a pair of branches or arms (9) between which a cross shaft (10) is located in correspondence with the ends, such that those ends of the side arms (9) are provided with retention means for an "X"-shaped spring (11) having two of its ends connected together through an intermediate span (11') of said spring (11), whereas the other two ends have a slight bending as support ends of the spring (11).

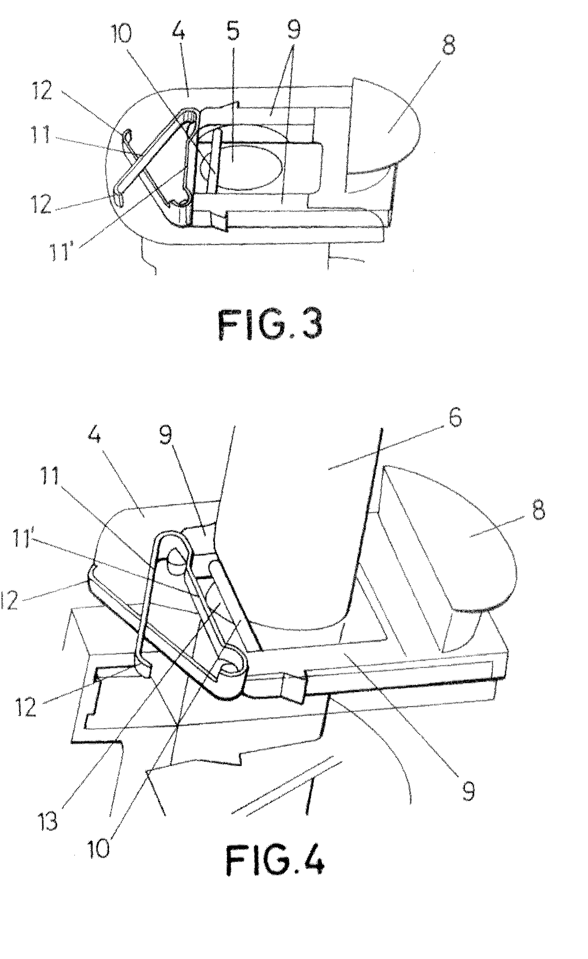

In an inoperative position, the spring (11) pushes against the manual actuation push button or button assembly (8), urging the cross shaft (10) to act in part on the hole (5) of the bushing (1), such that if the rod (6) is introduced in the bushing (1) through its upper hole (5) as shown in figure 4, then said cross shaft (10) acts on the notch provided for that purpose on the rod (6), retaining the latter and therefore the headrest with regard to the vehicle seat in which the bushing (1) is assembled.

Then, if actuated by pressing on the button (8), the latter moves and therefore the side branches (9) move against the force of the spring (11), taking with it the movement of the cross shaft (10) and therefore its release with regard to the side notch of the rod (6), permitting removal of the latter by manual pulling and therefore the disassembly of the headrest with regard to the vehicle seat.

When the push button (8) is not actuated, the rod (6), and therefore the headrest, are held with no possibility of being removed as a consequence of the corresponding notch in which the cross shaft (10) acts, has a lower straight portion, that is, it defines a straight seat or step preventing the upward movement of the rod (6) as long as the cross shaft (10) is positioned in the notch, permitting, however, the downward movement of said rod (6) since the portion opposite to that straight step (13) is inclined and therefore permits downward sliding and movement of the rod (6) and with it the headrest.

The assembly is complemented with an adornment (14) on the upper portion, having a notably bigger amplitude than the sleeve (1) contour, covering the entire head (4) and hiding the entire retention mechanism with the exception of the end corresponding to the actuation push button or button (8) for the purpose of permitting actuation of the latter and therefore release of the rod (6) with regard to the anchoring or locking mechanism thereof, having provided that said adornment (14) can act as a side retention element of the push button (8), that is, of the assembly formed by the button with the side arms (9) thereof, the cross shaft (10) and of course the "X"-shaped spring (11).

## Claims

1. A headrest rod and vehicle seat locking system comprising a tubular body in the form of a long sleeve (1) with means for anchoring on a frame arranged for that purpose inside of the corresponding vehicle seat, said sleeve (1) being provided with a head (4) with a hole facing an axial passage (5) of the sleeve (1) for the introduction of the corresponding headrest rod (6), all this combined with a retention mechanism of the rod (6), and which mechanism is assembled on the head (4) of the sleeve (1), that mechanism being formed from a manual actuation push button (8) with several side arms (9) susceptible to pushing against an "X"-shaped spring (11) for release of the rod (6) and its corresponding removal with regard to the sleeve (1) and therefore with regard to the seat frame, **characterized in that** it comprises a cross shaft (10) arranged between the ends of the side branches (9) corresponding to the manual actuation push button (8), which cross shaft (10), in inoperative position of the spring (11) anchored on the ends of the branches (9), acts on the corresponding side notch of the headrest rod (6) for retention of the latter.

2. A headrest rod and vehicle seat locking system according to claim 1, **characterized in that** the upper end of the sleeve (1) is complemented with an adornment (14) covering the entire head (4) of said sleeve (1), hiding the entire retention mechanism of the push button (8) portion which is manually actuated, having provided that said adornment (14) be susceptible to constituting a retention means of the locking mechanism assembly formed by the push button (8), side branches (9) thereof, spring (11) and cross shaft (10).

3. A headrest rod and vehicle seat locking system according to claim 1, **characterized in that** the side notch of the rod (6) on which the cross shaft (10) acts for retention of the rod, has a lower portion determining a straight step (13) preventing downward movement of the rod (6), the opposite and inclined part of said notch permitting upward movement of said rod (6).
